# EUROPÄISCHE PATENTANMELDUNG

(11) **EP 2 110 726 A2**
(43) Veröffentlichungstag der Anmeldung: **21.10.2009**
(21) Anmeldenummer: 09154816.4
(22) Anmeldetag: 11.03.2009
(51) Int. Cl.: G05B 19/418

(54) **Steuerungssystem für eine Elektronikfertigung und Verfahren zum Betrieb dieses Steuersystems**

(30) Priorität: 18.04.2008 DE 102008019650
(71) Anmelder: Siemens Electronics Assembly Systems GmbH & Co. KG, 81379 München (DE)
(72) Erfinder: Burmeister, Cord, 82131, Gauting (DE); Marktscheffel, Thomas, 83607, Holzkirchen (DE); Nguyen, Tuan Minh, 81735, München (DE); Wershofen, Klaus Peter, 86922, Eresing (DE)
(74) Vertreter: Maier, Daniel Oliver

(57) **Zusammenfassung**

Das Steuerungssystem (SYS) für diese Elektronikfertigung umfasst dabei Module (M1,...,M6) zur Steuerung von Teilprozessen, Dienste (S1,...,S4) zur Ermittlung von Anlagen- und Anwendungsparametern sowie Beschreibungen (M&S-Des) der Eigenschaften dieser Module (M1,...,M6) und Dienste (S1,...,S4). Weiters sind ein Module- und Dienstregister (M&S-Reg), eine Konfigurationseinheit (KE) zum Verwalten von Abbildungen der Automatisierungseinheiten und ein Steuerelement (SE) beim erfindungsgemäßen Steuersystem (SYS) vorgesehen. Gemäß dem beschriebenen Verfahren werden zuerst die vorhandenen Module (M21) zur Steuerung von Teilprozessen und Dienste (S21,S22) zur Ermittlung von Anlagen- und Anwendungsparametern im Module- und Dienstregister (M&S-Reg) als verfügbar registriert (1a,1b). Von einem bestimmten, gewählten Modul (M21) zur Steuerung von Teilprozessen wird dann ein Ablauf (AB21) eines Teilprozesses definiert und implementiert (2), wobei die für diesen Ablauf notwendigen Daten von den jeweiligen Diensten (S21,S22) zur Ermittlung von Anlagen- und Anwendungsparametern bereitgestellt werden (3). Dann wird dieser Ablauf (AB21) durch Aufrufen des entsprechenden Moduls (M21) zur Steuerung von Teilprozessen durch das Steuerelement (SE) des Steuerungssystems (SYS) ausgeführt (4,5).

## Beschreibung

### Technisches Gebiet

Die Erfindung bezieht sich auf ein Steuerungssystem für eine Elektronikfertigung, wobei für die Elektronikfertigung Automatisierungseinheiten eingesetzt werden. Mittels dieser Automatisierungseinheiten wird eine Handhabung von elektronischen Bauelementen und Leiterplatten anhand von Prozessen, welche in Teilprozesse unterteilbar sind, geplant, definiert, durchgeführt und überwacht. Weiters bezieht sich die Erfindung auch auf ein Verfahren zum Betrieb des erfindungsgemäßen Steuersystems.

### Stand der Technik

Der Begriff Fertigung bezeichnet üblicherweise eine Produktion von zählbaren Stückgütern. Die Fertigung von Elektronik wie z.B. von bestückten Leiterplatten, welche beispielsweise mittels der sogenannten Surface Mounted Technology - kurz SMT - hergestellt werden, basiert dabei üblicherweise auf mehreren Prozesse bzw. Abläufen, welche üblicherweise in Teilprozesse untergliedert werden können. Diese Fertigungsprozesse bzw. -abläufe werden von sogenannten, für den jeweiligen Prozess geeigneten Automatisierungseinheiten ausgeführt. Solche Automatisierungseinheiten sind beispielsweise Bestückautomaten, Ofen, Lagerverwaltungssysteme, System für eine Rüstvorbereitung, System für Monitoring und Qualitätskontrolle, Drucker, etc.

Die Fertigungsprozesse bzw. -abläufe zur Produktion von Elektronik umfassen beispielsweise Planung von auszuführenden Aufträgen, Definition des Produktes, bei welcher für ein Bestücken benötigte Daten erstellt werden, Material- wie Setup-Management, Bestückprozesse sowie ein Erfassen, Auswerten und Dokumentieren von verschiedenen Prozessdaten, wobei dieser Prozess auch als Monitoring bezeichnet wird.

Beim Material-Management werden die Zu- und Abfuhr sowie eine Verwaltung des für die Fertigung notwendigen Materials durchgeführt. Bei der Fertigung von Elektronik (z.B. bestückte Leiterplatten) umfasst beispielsweise das zu handhabende Material insbesondere Leiterplatten und elektronische Bauelemente (z.B. Widerstände, Kondensatoren, Integrierte Schaltungen (IC), etc.). Eine Leiterplatte ist dabei ein Träger aus elektrisch isolierendem Material (z.B. Phenolharz mit Papier, Epoxidharz mit Papier oder Glasfasergewebe, etc.), auf welchem festhaftend leitende Verbindungen aufgebracht sind. Die Leiterplatte dient damit der mechanischen Befestigung (z.B. durch Löten oder durch Kleben) und der elektrischen Verbindung der elektronischen Bauteile.

Vom so genannten Setup-Management werden alle Aktivitäten beim Rüsten von Automatisierungseinheiten, insbesondere von Bestückautomaten umfasst, welche vor, während und nach einem Bestückprozess anfallen. Der Bestückprozess oder das so genannte Placement umfasst dann Teilschritte wie z.B. ein Aufbringen der Lötpaste auf die Leiterplatten, ein Bestücken der Leiterplatten mit den elektronischen Bauelementen und danach das Löten der bestückten Leiterplatte in einem Ofen.

Für eine Steuerung der Fertigungsprozesse wurde vom American National Standard Institute (ANSI) bzw. von der Instrumentation, Systems & Automation Society (ISA) die Normenreihe ANSI/ISA-95.00.01 (kurz: ISA-95) herausgegeben, welche Standards für eine Integration von Unternehmens- und Betriebsleitebene vorgibt. Die Normenreihe ISA-95 umfasst dabei Modelle und Terminologien, welche eingesetzt werden können, um jene Daten festzulegen, die beispielsweise zwischen Systemen für einen Vertrieb, Einkauf und/oder Beschaffung und Systemen für Produktion, Instandhaltung und Qualitätssicherung ausgetauscht werden. So werden von der ISA-95, insbesondere in Teil 1 (ISA-95.00.01-2000), z.B. Modelle zur Verfügung gestellt, welche eine Basis für eine Entwicklung von Standardschnittstellen zwischen Planungssystemen - wie z.B. so genannten Enterprise Resource Planning-Systemen - und Fertigungsmanagementsystemen (z.B. so genannte Manufacturing Execution Systemen) darstellt. Bei diesen Modellen wird eine Fertigung beispielsweise aus funktionaler und hierarchischer Sicht in verschiedene Ebene, so genannte Levels, gegliedert - wie z.B. Level 0,1,2 - Batch Control, Continuous Control, Discrete Control, Level 3 - Manufacturing Operations & Control oder Level 4 - Business Planning & Logistics. Diesen unterschiedlichen Ebenen werden Funktionalitäten zugeordnet, welche beispielsweise bei den Ebenen 0 bis 3 Teilprozessen der Fertigungsprozesse entsprechen.

Um die geforderten Funktionalitäten bzw. Teilprozesse im Fertigungsbereich realisieren zu können, werden beispielsweise Systeme für Fertigungsplanung, Fertigungsdurchführung, Materialmanagement, Monitoring, etc. eingesetzt, von welchen über offengelegte oder sogar standardisierte Schnittstellen verfügt wird. Für eine Steuerung der Elektronikfertigung werden diese System dann durch ein geeignetes Set von - meist kunden-/fertigungsspezifischen Anwendungen ergänzt. Dabei basieren diese Anwendungen auf den von den offengelegten Schnittstellen zur Verfügung gestellten Funktionalitäten bzw. Teilprozessen und/oder Daten.

Es hat sich bei einem derartig realisierten Steuerungssystem für eine Elektronikfertigung als nachteilig erwiesen, dass insbesondere durch einen Einsatz von kunden- und/oder fertigungsspezifischen Anwendungen für die Realisierung der geforderten Funktionalitäten eine Erweiterung dieses Steuerungssystems sehr aufwendig ist. Damit wird vom einen derartig strukturierten Steuerungssystem durch den Einsatz spezifischer Anwendungen eine relativ geringe Flexibilität aufgewiesen, da jede Erweiterung sehr speziell an das jeweilige, meist spezifisch gestaltete Steuerungssystem angepasst werden muss. Zusätzlich ist es sehr aufwendig, eventuelle Erweiterungen des Systems zu testen.

### Darstellung der Erfindung

Der Erfindung liegt daher die Aufgabe zugrunde, ein Steuerungssystem eingangs genannter Art zu schaffen, welches auf einfache Weise erweiterbar ist und eine große Flexibilität aufweist.

Weiters betrifft die Erfindung ein Verfahren zum Betrieb eines solchen Steuerungssystems für eine Elektronikfertigung.

Diese Aufgabe wird durch die Gegenstände der unabhängigen Patentansprüche gelöst. Vorteilhafte Ausführungsformen der vorliegenden Erfindung sind in den abhängigen Ansprüchen beschrieben.

Mit dem unabhängigen Patentanspruch 1 wird ein Steuerungssystem für eine Elektronikfertigung der eingangs angeführten Art beschrieben, welches Module zur Steuerung von Teilprozessen, in welche die Prozesse der Elektronikfertigung gegliedert werden können, und Dienste zur Ermittlung von Anlagen- und Anwendungsparametern umfasst. Weiters sind beim erfindungsgemäßen Steuerungssystem Beschreibungen von Eigenschaften der Module zur Steuerung von Teilprozessen sowie der Dienste zur Ermittlung von Anlagen- und Anwendungsparametern, ein Module- und Dienstregister, eine Konfigurationseinheit zum Verwalten von Abbildungen der Automatisierungseinheiten und ein Steuerelement vorgesehen.

Dabei stellen die Module zur Steuerung von Teilprozessen elementare Einheiten des Steuerungssystems dar, durch welche bestimmte Teilprozesse gemäß einem bestimmten Ablaufpfad durchgeführt und abgearbeitet werden. Für eine Definition, Implementierung und Durchführung eines bestimmten Ablaufpfades wird dann auf die Dienste zur Ermittlung von Anlagen- und Anwendungsparameter zurückgegriffen, von denen auch Steuerungseingriffen in eine Elektronikfertigung vorgegeben werden können.

Die Beschreibungen der Eigenschaften der Module und Dienste sind generisch verfügbar. Sie umfassen Vorlagen - so genannte Templates - für jene Module zur Steuerung von Teilprozessen, die prinzipiell vom Steuerungssystem unterstützt werden, sowie Beschreibungen von Schnittstellen (z.B. Regeln für Informationsübertragung, Form der zu übertragenden Informationen, etc.) für jene Dienste, welche vom Steuerungssystem unterstützt werden.

Im Module- und Diensteregister sind die tatsächlich im Steuerungssystem verfügbaren Module zur Steuerung von Teilprozessen und Dienste zur Ermittlung von Anlagen- und Anwendungsparametern registriert. Von der Konfigurationseinheit werden Abbildungen der tatsächlich an den jeweiligen Prozessen der Elektronikfertigung beteiligten Automatisierungseinheiten (z.B. Daten über die Konfiguration oder über Schnittstellen einer Automatisierungseinheit, etc.) verwaltet. Das Steuerelement dient dann der Ausführung der Module zur Steuerung von Teilprozessen.

Der Hauptaspekt des erfindungsgemäß vorgeschlagenen Steuerungssystems besteht insbesondere darin, dass dieses Steuerungssystem durch seinen modularen Aufbau sehr flexible und auf einfache Weise erweiterbar ist. Ein wichtiges Kennzeichen des erfindungsgemäßen Steuerungssystem ist dabei, dass nicht alle in den Beschreibungen der Eigenschaften der Module und Dienste beschriebenen Module zur Steuerung von Teilprozessen und Dienste zur Ermittlung von Anlagen- und Anwendungsparametern, welche auch Dienste zur Vorgabe von Steuerungseingriffen in die Elektronikfertigung umfassen können, auch tatsächlich implementiert sein müssen. Dadurch werden auf vorteilhafte Weise eine schrittweise Realisierung, eine einfache Erweiterung sowie eine stufenweise Installation des Steuerungssystems ermöglicht.

Das Steuerungssystem weist außerdem den Vorteil auf, dass es einfach zu testen ist, da durch den modularen Aufbau die Module zur Steuerung von Teilprozessen sowie die Dienste zur Ermittlung von Anlagen- und Anwendungsparametern auf einfache Weise für sich testbar sind.

Eine zweckmäßige Ausgestaltung der Erfindung sieht vor, dass die Module zur Steuerung von Teilprozessen aus so genannten Aktivitäten zusammengesetzt sind. Eine Aktivität stellt dabei eine elementare Einheit eines Moduls dar und umfasst einzelne Aktionen wie beispielsweise Abrufen von Daten, Speichern von Daten in einer Datenbank, etc. oder Kombinationen von solchen Aktionen. Dadurch kann ein Modul zur Steuerung von Teilprozessen auf einfache Weise in kleinere Einheiten unterteilt werden und an den jeweils zu steuernden Teilprozess optimal angepasst werden.

Weiters ist es vorteilhaft, wenn die Dienste zur Ermittlung von Anlagen- und Anwendungsparametern geeignet sind, für die Module zur Steuerung von Teilprozessen entsprechende Daten bereitzustellen. Von einem Modul zur Steuerung von Teilprozessen wird während seines Ablaufes bzw. Ausführung auf Dienste zur Ermittlung von Anlagen- und Anwendungsparameter zugegriffen, welche idealerweise bezüglich ihrer Schnittstelleninfrastruktur einheitlich - d.h. nach vorgegebenen Richtlinien - implementiert sind.

In weiterer Ausgestaltung des erfindungsgemäßen Steuerungssystems ist vorgesehen, dass als zentrale Einheit das Module- und Dienstregister vorgesehen ist. In diesem werden die vorhandenen Module zur Steuerung von Teilprozessen sowie die vorhandenen Dienste zu Ermittlung von Anlagen- und Anwendungsparametern in vorteilhafter Weise als verfügbar registriert. Dadurch ist für die Definition und Implementierung des Ablaufes eines Teilprozesses auf einfache Weise ersichtlich, welche Module und Dienste für diesen Ablauf zur Verfügung stehen.

Bei einem bevorzugten Ausführungsbeispiel ist das Steuerelement dazu vorgesehen, die Module zur Steuerung von Teilprozessen aufzurufen und diese bzw. den durch das jeweilige Modul definierten und implementieren Ablauf auszuführen. Dabei ist es auch vorteilhaft, wenn das Steuerelement dazu geeignet ist, Module zur Steuerung von Teilprozessen zu Modulgruppen zusammenzufügen und zu konfigurieren. Auf diese Weise können auch komplexere Teilprozesse einfach realisiert werden, welche dann auf einfache Weise vom Steuerelement anhand der konfigurierten Modulgruppen ausgeführt werden können.

Weiterhin betrifft die Erfindung ein Verfahren zum Betrieb des erfindungsgemäßen Steuerungssystems, welche mit dem unabhängigen Patentanspruch 8 beschrieben wird. Bei diesem Verfahren werden zuerst die vorhandenen Module zur Steuerung von Teilprozessen sowie die vorhandenen Dienste zur Ermittlung von Anlagen- und Anwendungsparametern im Module-und Dienstregister als verfügbar registriert, damit diese für die Definition und Implementierung eines Ablaufes eines Teilprozesses überhaupt genutzt werden können. Diese Definition und Implementierung erfolgt dann im darauffolgenden Schritt. Für den Ablauf eines Teilprozesses werden dann die notwendigen Daten (z.B. Parameter von Automatisierungseinheiten, Schnittstellendefinitionen, etc.) von den jeweiligen Diensten zur Ermittlung von Anlagen- und Anwendungsparametern zur Verfügung gestellt. Eine Ausführung dieses Ablaufs eines Teilprozesses erfolgt dann durch Aufrufen des entsprechenden Moduls zur Steuerung von Teilprozessen bzw. einer entsprechenden Modulekombination durch das Steuerelement. Durch die modulare Gestaltung ist das erfindungsgemäße Verfahren ebenfalls sehr flexibel einsetzbar und kann auf einfache Weise erweitert werden.

Es ist vorteilhaft, wenn beim Registrieren eines Moduls zu Steuerung von Teilprozessen eine Verfügbarkeit der zur Ausführung des Moduls benötigten Dienste zur Ermittlung von Anlagen- und Anwendungsparametern geprüft wird, weil auf diese Weise sichergestellt wird, dass alle zur Ausführung des jeweiligen Teilprozesses notwendigen Dienste verfügbar sind.

### Kurzbeschreibung der Zeichnung

Die Erfindung wird nachfolgend in beispielhafter Weise anhand von beigefügten Figuren erläutert. Es zeigen:
- Fig. 1: in beispielhafter Weise schematisch die Struktur des erfindungsgemäßen Steuerungssystems für eine Elektronikfertigung
- Fig. 2: in beispielhafter Weise den schematischen Ablauf des erfindungsgemäßen Verfahrens zum Betrieb des erfindungsgemäßen Steuerungssystems

### Ausführung der Erfindung

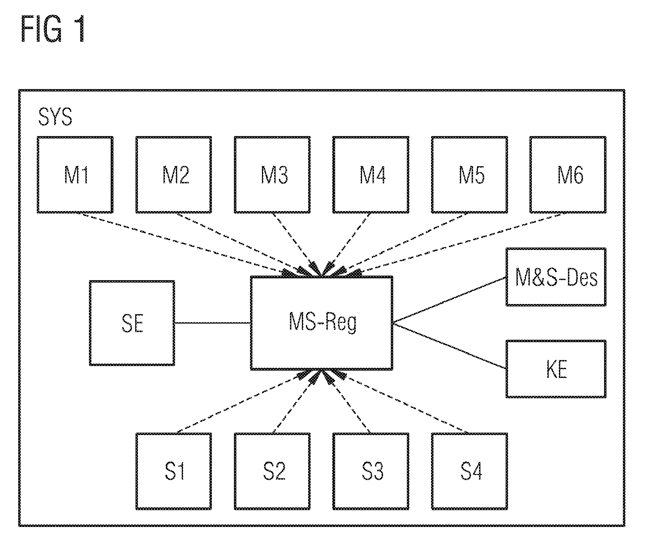

Figur 1 zeigt in beispielhafter Weise und in schematischer Form ein Steuerungssystem SYS für eine Elektronikfertigung, wobei für die Fertigung von Elektronik - insbesondere bestückte Leiterplatten - Automatisierungseinheiten wie z.B. Planungssysteme, Lagerverwaltungssysteme, System für eine Rüstvorbereitung, Bestückautomaten, Öfen zum Löten, System für Monitoring und Qualitätskontrolle, Drucker, etc. zum Einsatz kommen. Von diesen Automatisierungseinheiten werden Prozessen, die in Teilprozesse unterteilbar sind, wie beispielsweise Planung von auszuführenden Aufträgen, Definition des Produktes, bei welcher für ein Bestücken benötigte Daten erstellt werden, Material- wie Setup-Management, Bestückprozesse sowie ein Monitoring zur Produktion von Elektronik bzw. bestückten Leiterplatten durchgeführt.

Für eine Steuerung der Elektronikfertigung wird dabei das Steuerungssystem SYS eingesetzt, dass aus mehreren in Figur 1 schematisch und beispielhaft dargestellten Komponenten besteht. Das Steuerungssystem SYS umfasst beispielsweise mehrere Module zur Steuerung von Teilprozessen M1 bis M6, wobei die Module M1 bis M6 aus so genannten Aktivitäten (z.B. zusammengesetzt sein können. Eine Aktivität stellt dabei eine elementare Einheit eines Moduls dar und umfasst einzelne Aktionen wie beispielsweise Abrufen von Daten, Speichern von Daten in einer Datenbank, etc. oder Kombinationen von solchen Aktionen.

Eine Anzahl der Module zur Steuerung von Teilprozessen M1 bis M6 ist aus den vom Steuerungssystem SYS zu unterstützenden Prozessen der Elektronikfertigung ableitbar. Für jeden unterstützten Prozess (z.B. Planung, Produktdefinition, Material- und Set-Up-Management, Bestückprozess, Monitoring) bzw. für seine entsprechenden Teilprozesse können bestimmte Module M1 bis M6 zur Steuerung der jeweiligen Teilprozesse im Steuerungssystem SYS vorgesehen sein.

Weiters umfasst das Steuerungssystem SYS beispielhafte Dienste S1 bis S4 zur Ermittlung von Anlagen- und Anwendungsparametern und zur Vorgabe von Steuerungseingriffen in die Elektronikfertigung. Von diesen Diensten S1 bis S4 werden die von den Modulen zur Steuerung von Teilprozessen M1 bis M6 bzw. von den Aktivitäten der einzelnen Module M1 bis M6 benötigten Daten (z.B. Anlagenparameter, Materialdaten, Steuerungsvorgaben, etc.) ermittelt und bereit gestellt. Eine Anzahl und Art der Diensten S1 bis S4 zur Ermittlung von Anlagen- und Anwendungsparametern und zur Vorgabe von Steuerungseingriffen in die Elektronikfertigung für das Steuerungssystem SYS wird somit implizit durch die vom Steuerungssystem SYS unterstützten Prozesse bzw. Teilprozesse festgelegt.

Das Steuerungssystem SYS weist als zentrale Komponente ein Module- und Dienstregister MS-Reg auf. Im Module- und Dienstregister MS-Reg sind alle verfügbaren Module zur Steuerung von Teilprozessen M1 bis M6 sowie alle verfügbaren Dienste S1 bis S4 zur Ermittlung von Anlagen- und Anwendungsparametern und zur Vorgabe von Steuerungseingriffen in die Elektronikfertigung registriert. Bei einer Registrierung von einem Modul zur Steuerung von Teilprozessen M1 bis M6 wird z.B. vom Module- und Dienstregister MS-Reg auch geprüft, ob alle für ein Ausführen dieses Module M1 bis M6 notwendigen Dienste S1 bis S4 zur Ermittlung von Anlagen-und Anwendungsparametern und zur Vorgabe von Steuerungseingriffen in die Elektronikfertigung vorhanden sind - d.h. im Module- und Dienstregister MS-Reg als für das Steuerungssystem SYS verfügbar registriert sind. Wird beispielsweise ein Modul zur Steuerung eines Teilprozesses M1 bis M6 ausgeführt, so wird ebenfalls über das Module- und Dienstregister MS-Reg der oder die notwendigen Dienste S1 bis S4 zur Ermittlung von Anlagen- und Anwendungsparametern und zur Vorgabe von Steuerungseingriffen in die Elektronikfertigung aufgerufen.

Weiters weist das Steuerungssystem SYS eine Komponente M&S-Des mit Beschreibungen der Eigenschaften der Module M1 bis M6 und der Dienste S1 bis S4 auf. Die Beschreibungen M&S-Des der Eigenschaften der Module und Dienste sind generisch verfügbar und umfassen Vorlagen - so genannte Templates - für Module zur Steuerung von Teilprozessen M1 bis M6 sowie Beschreibungen von Schnittstellen (z.B. Regeln für Informationsübertragung, Form der zu übertragenden Informationen, etc.) für Dienste S1 bis S4 zur Ermittlung von Anlagen- und Anwendungsparameter und zur Vorgabe von Steuerungseingriffen in die Elektronikfertigung. Dabei werden von den Beschreibungen M&S-Des der Eigenschaften der Module M1 bis M6 und der Dienste S1 bis S4 Beschreibungen aller Module M1 bis M6 und Dienste S1 bis S4 zur Verfügung gestellt, welche vom Steuerungssystem SYS prinzipiell unterstützt werden können. Das bedeutet, dass beispielsweise nicht alle Module M1 bis M6 bzw. Dienste S1 bis S4, welche von den Beschreibungen M&S-Des beschrieben sind, tatsächlich auch am Steuerungssystem SYS implementiert bzw. im Module-und Dienstregister MS-Reg registriert sein müssen.

Für bestimmte Sonderfällen (z.B. spezielle Konfiguration einer Bestückanlage, spezielle Prozessanforderungen etc.) ist es allerdings auch möglich, dass im Module- und Dienstregister MS-Reg Module zur Steuerung von Teilprozessen M1 bis M6 und/oder Dienste S1 bis S4 zur Ermittlung von Anlagen- und Anwendungsparameter und zur Vorgabe von Steuerungseingriffen in die Elektronikfertigung registriert werden, welche nicht oder nur teilweise einer Beschreibung in den Beschreibungen M&S-Des der Eigenschaften der Module und Dienste entsprechen.

Das Steuerungssystem SYS umfasst dann noch eine Konfigurationseinheit KE sowie ein Steuerelemente SE. Von der Konfigurationseinheit KE werden Daten und Abbildungen (z. B. physikalisches Layout) der in den Prozessen der Elektronikfertigung eingesetzten Automatisierungseinheiten verwaltet. Die Konfigurationseinheit KE wird z.B. vom Module- und Dienstregister MS-Reg benötigt, um eine Abbildung der Dienste S1 bis S4 zur Ermittlung von Anlagen- und Anwendungsparametern und zur Vorgabe von Steuerungseingriffen in die Elektronikfertigung auf tatsächliche Gegebenheiten (z.B. eingesetzte Automatisierungseinheit, etc.) zu ermöglichen.

Das Steuerelement SE wird eingesetzt, um die Module zur Steuerung von Teilprozessen M1 bis M6 aufzurufen und auszuführen. Zusätzlich können mittels dem Steuerelement SE einzelne Module zur Steuerung von Teilprozessen M1 bis M6 zu Modulgruppen zusammengefügt, konfiguriert und dann entsprechend ausgeführt werden.

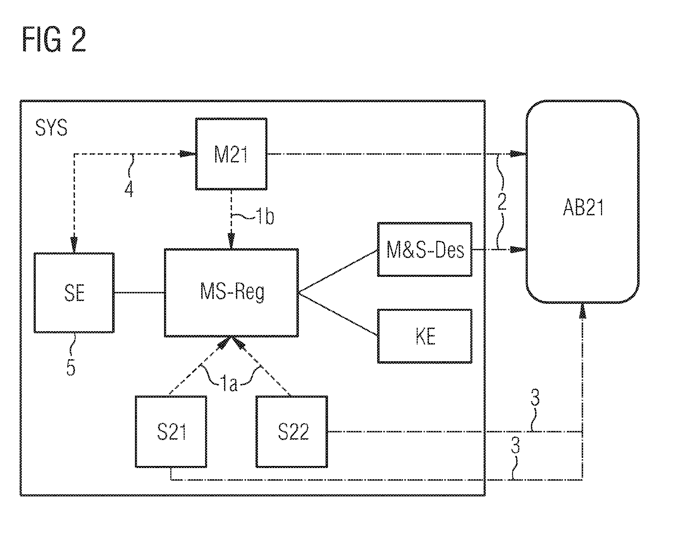

Figur 2 zeigt beispielhaft anhand eines Teilprozesses der Elektronikfertigung (z.B. einer Rüstverifikation) in schematischer Weise den Ablauf des erfindungsgemäßen Verfahrens zum Betrieb des Steuerungssystems SYS sowie den jeweiligen Einsatz der entsprechenden Komponenten des Steuerungssystems SYS.

In Figur 2 ist wieder das beispielhafte Steuerungssystem SYS mit dem Module- und Dienstregister MS-Reg, den Beschreibungen MS-Des der Eigenschaften von Modulen und Diensten, der Konfigurationseinheit KE und dem Steuerelemente SE dargestellt.

Der Einfachheit halber sind in Figur 2 nur jene Module zur Steuerung von Teilprozessen M21 und Dienste S21, S22 zur Ermittlung von Anlagen- und Anwendungsparameter und zur Vorgabe von Steuerungseingriffen in die Elektronikfertigung dargestellt, welche für eine Erläuterung des Ablaufes des erfindungsgemäßen Verfahrens anhand des beispielhaften Teilprozesses "Rüstverifikation" notwendig sind. Zusätzlich ist auch in beispielhafter Weise ein vom Modul zur Steuerung von Teilprozessen M21 definierter Ablauf AB21 zur Steuerung des entsprechenden Teilprozesses in Figur 2 zu sehen.

In einem ersten Verfahrensschritt 1a werden die für eine Ausführung von Modulen zur Steuerung von Teilprozessen M21 notwendigen Dienste S21, S22 zur Ermittlung von Anlagen- und Anwendungsparametern und zur Vorgabe von Steuerungseingriffen in die Elektronikfertigung als verfügbar im Module- und Dienstregister MS-Reg registriert. Für einen Teilprozess zur Verifikation des Rüstvorgangs werde z.B. Dienste S21, S22 zur Ermittlung von Anlagen- und Anwendungsparametern und zur Vorgabe von Steuerungseingriffen in die Elektronikfertigung benötigt, von welchen Daten über eine geforderte Rüstung und eine tatsächliche Rüstung einer Automatisierungseinheit (z.B. Bestücklinie, Bestückautomat, etc.) geliefert werden.

In einem zweiten Verfahrensschritt 1b wird dann das Modul zur Steuerung von Teilprozessen M21 - beispielsweise für die Steuerung des Teilprozesses zur Verifikation des Rüstvorgangs - im Module- und Dienstregister MS-Reg als verfügbar registriert. Bei diesem Verfahrensschritt 1b besteht die Möglichkeit bei der Registrierung des Moduls zur Steuerung von Teilprozessen M21 zu prüfen, ob alle zur Ausführung dieses Moduls M21 notwendigen Dienste S21, S22 zur Ermittlung von Anlagen- und Anwendungsparametern und zur Vorgabe von Steuerungseingriffen in die Elektronikfertigung verfügbar sind. Sind alle notwendigen Dienste S21, S22 vorhanden, so ist eine Registrierung des Moduls zur Steuerung von Teilprozessen M21 erfolgreich und das Modul M21 wird als ausführbares Modul z.B. in einer Modulliste am Steuerelement sichtbar.

In einem dritten Verfahrensschritt 2 wird dann auf Basis des Moduls M21 der Ablauf AB21 zur Steuerung des Teilprozesses - beispielsweise der Rüstverifikation - definiert und implementiert. Dabei wird von den Beschreibungen MS-Des der Eigenschaften von Modulen und Diensten ein entsprechendes Template für das Modul M21 zur Steuerung des gewünschten Teilprozesses "Rüstverifikation" geliefert, um den zugehörigen Ablauf AB21 zur Steuerung dieses Teilprozesses zu implementieren.

In einem vierten Verfahrensschritt 3 werden dann von den Diensten S21, S22 zur Ermittlung von Anlagen- und Anwendungsparametern und zur Vorgabe von Steuerungseingriffen in die Elektronikfertigung für den Ablauf AB21 notwendige Daten - wie z.B. für den Teilprozess der Rüstverifikation die tatsächlichen und die geforderten Rüstdaten einer zu prüfenden Bestücklinie oder eines zu prüfenden Bestückautomaten. Sind die entsprechenden Daten bereit gestellt worden, so wird in einem fünften Verfahrensschritt 4 das Modul M21 zur Steuerung des gewünschten Teilprozesses vom Steuerelement SE aufgerufen. Diese kann beispielsweise durch Aufruf des Modul M21 bzw. des zugehörigen Ablaufes AB21 aus der am Steuerelement SE selbst abgelegten Modulliste erfolgen, in welcher alle ausführbaren Module zur Steuerung von Teilprozessen M21 eingetragen sind. Ausführbar sind alle im Module- und Diensteregister MS-Reg registrierten Module zur Steuerung von Teilprozessen M21.

In einem sechsten Verfahrensschritt 5 wird dann der Ablauf AB21 zur Steuerung eines Teilprozesses ausgeführt. Dabei wird beispielsweise beim Teilprozess der Rüstverifikation die tatsächliche Rüstung mit der geforderten Rüstung der Bestücklinie oder des Bestückautomaten verglichen und für Übereinstimmung bzw. bei Abweichungen z.B. eine entsprechende Meldung ausgegeben.

Im Prinzip werden für jedes Modul zur Steuerung von Teilprozessen und damit für die Ausführung von Teilprozessen die Verfahrenschritt 1a, 1b bis 5 durchlaufen. Vom Steuerungssystem SYS wird aber auch ermöglicht, bei Module zur Steuerung von Teilprozessen M1 bis M6 bzw. M21 zu Modulgruppen zusammenzufassen bzw. entsprechend zu konfigurieren. Dabei können dann Module zur Steuerung von Teilprozessen M1 bis M6 bzw. M21 sich auch gegenseitig aufrufen und damit auf Basis von einzelnen Modulen zur Steuerung von Teilprozessen M1 bis M6 bzw. M21 komplexe Teilprozesse realisiert werden.

## Patentansprüche

1. Steuerungssystem (SYS) für eine Elektronikfertigung, bei welcher Automatisierungseinheiten eingesetzt sind, durch welche anhand von in Teilprozesse unterteilbaren Prozessen eine Handhabung von Bauelementen und Leiterplatten erfolgt, **dadurch gekennzeichnet, dass**
- Module (M1, M2, M3, M4, M5, M6) zur Steuerung von Teilprozessen
- Dienste (S1, S2, S3, S4) zur Ermittlung von Anlagen-und Anwendungsparametern
- sowie Beschreibungen (M&S-Des) der Eigenschaften dieser Module (M1, M2, M3, M4, M5, M6) und Dienste (S1, S2, S3, S4) vorgesehen sind,
- dass weiters ein Module- und Dienstregister (M&S-Reg)
- eine Konfigurationseinheit (KE) zum Verwalten von Abbildungen der Automatisierungseinheiten,
- und ein Steuerelement (SE) vorgesehen sind.

2. Steuerungssystem (SYS) nach Anspruch 1, **dadurch gekennzeichnet, dass** die Module (M1, M2, M3, M4, M5, M6) zur Steuerung von Teilprozessen aus Aktivitäten zusammengesetzt sind.

3. Steuerungssystem (SYS) nach einem der Ansprüche 1 bis 2, **dadurch gekennzeichnet, dass** die Dienste (S1, S2, S3, S4) zur Ermittlung von Anlagen- und Anwendungsparametern geeignet sind, entsprechende Daten für die Module (M1, M2, M3, M4, M5, M6) zur Steuerung von Teilprozessen bereitzustellen.

4. Steuerungssystem (SYS) nach einem der Ansprüche 1 bis 3, **dadurch gekennzeichnet, dass** das Module- und Dienstregister (M&S-Reg) als zentrale Einheit vorgesehen ist, in welchem vorhandene Module (M1, M2, M3, M4, M5, M6) zur Steuerung von Teilprozessen und vorhandene Dienste (S1, S2, S3, S4) zur Ermittlung von Anlagen- und Anwendungsparametern als verfügbar registriert sind.

5. Steuerungssystem (SYS) nach einem der Ansprüche 1 bis 4, **dadurch gekennzeichnet, dass** das Steuerelement (SE) geeignet ist, Module (M1, M2, M3, M4, M5, M6) zur Steuerung von Teilprozessen aufzurufen und auszuführen.

6. Steuerungssystem (SYS) nach einem der Ansprüche 1 bis 5, **dadurch gekennzeichnet, dass** das Steuerelement (SE) geeignet ist, Module(M1, M2, M3, M4, M5, M6) zur Steuerung von Teilprozessen zu Modulgruppen zusammenzufügen und zu konfigurieren.

7. Steuerungssystem (SYS) nach Anspruch 6, **dadurch gekennzeichnet, dass** das Steuerelement (SE) geeignet ist, konfigurierte Modulgruppen auszuführen.

8. Verfahren zum Betrieb eines Steuerungssystems (SYS) nach einem der Ansprüche 1 bis 7, **dadurch**
**gekennzeichnet, dass** zuerst die vorhandenen Module (M21) zur Steuerung von Teilprozessen sowie die Dienste (S21, S22) zur Ermittlung von Anlagen- und Anwendungsparametern als verfügbar im Module- und Dienstregister (M&S-Reg) registriert werden (1a, 1b), dass von einem bestimmten Modul (M21) zur Steuerung von Teilprozessen ein Ablauf (AB21) eines Teilprozesses definiert und implementiert wird (2),
dass die für diesen Ablauf (AB21) notwendigen Daten von den jeweiligen Diensten (S21, S22) zur Ermittlung von Anlagen- und Anwendungsparametern bereitgestellt werden (3),
und dass dann dieser Ablauf (AB1) durch Aufrufen des entsprechende Moduls (M21) zur Steuerung von Teilprozessen durch das Steuerelement (SE) ausgeführt wird (4, 5).

9. Verfahren nach Anspruch 8, **dadurch gekennzeichnet, dass** beim Registrieren des Moduls (M21) zur Steuerung von Teilprozessen eine Verfügbarkeit der zur Ausführung des Moduls benötigten Dienste (S21, S22) zur Ermittlung von Anlagen- und Anwendungsparametern geprüft wird.
